# EUROPÄISCHE PATENTSCHRIFT

(11) **EP 2 612 407 B1**
(45) Veröffentlichungstag und Bekanntmachung des Hinweises auf die Patenterteilung: **01.10.2014**
(21) Anmeldenummer: 11749350.2
(22) Anmeldetag: 26.08.2011
(51) Int. Cl.: H02B 1/01

(54) **GESTELL**
RACK
BÂTI

(30) Priorität: 30.08.2010 DE 102010035789
(43) Veröffentlichungstag der Anmeldung: 10.07.2013
(73) Patentinhaber: C E S Control Enclosure Systems GmbH, 61348 Bad Homburg v. d. Höhe (DE)
(72) Erfinder: HOFMANN, Wilfried, 80801 München (DE); JOCHAM, Simon, 80469 München (DE); SCHAAF, Igor, Harry, 77836 Rheinmünster (DE); MAZURA, Paul, 76307 Karlsbad (DE); HELLWIG, Manfred, 61350 Bad Homburg v. d. Höhe (DE); NICOLAI, Walter, 35418 Buseck (DE)
(74) Vertreter: Beyer, Andreas
(86) Internationale Anmeldenummer: PCT/EP2011/004288
(87) Internationale Veröffentlichungsnummer: WO 2012/031697

(56) Entgegenhaltungen:
- WO-A2-2007/082962
- DE-C1- 3 344 598

## Beschreibung

Die vorliegende Erfindung betrifft ein Gestell, insbesondere für ein Gestell, das einen Rahmen für einen Schaltschrank bildet, mit mehreren miteinander verbindbaren Rahmenschenkeln, wobei jeder Rahmenschenkel als zylinderförmiges Hohlprofil ausgebildet ist und sich entlang einer Längsachse erstreckt, und wobei die Längsachsen zweier miteinander verbundener Rahmenschenkel schräg zueinander angeordnet sind. Mit dem Begriff "Gestell" sind hier stützende Strukturen gemeint, wie sie beispielsweise im Möbel- und insbesondere Regalbau zum Einsatz kommen, aber auch sonstige Stützstrukturen, etwa Maschinenuntergestelle, Stützrahmen für Umhausungen etc.

Die bereits erwähnten Schaltschränke dienen im Allgemeinen dazu, elektrische und elektronische Komponenten einer verfahrenstechnischen Anlage, einer Werkzeugmaschine, einer Fertigungseinrichtung etc. zu beherbergen, die sich nicht unmittelbar in oder an der Maschine (z. B. Sensoren) befinden. Je nach Art der einzubauenden Komponenten werden unterschiedliche Anforderungen an den Schaltschrank gestellt. So kann hinsichtlich der im Innenraum einzubauenden Komponenten gefordert sein, dass der Schaltschrank diese vor Staub und Wasser (Schutzart, IP-Schutzklassen nach DIN EN 60529), vor Überhitzung (Schaltschrankklimatisierung), vor elektromagnetischer Beeinflussung (EMV) und/oder vor mechanischen Einflüssen, Vandalismus und Erdbeben (Schränke mit zusätzlichen Streben) schützt. Weiterhin kann ein Schaltschrank zur Halterung und Strukturierung des Innenaufbaus (z.B. mit Hilfe von Tragschienen oder Montageplatten zur Unterteilung in Leistungs- und Steuerungsbereiche) dienen.

Zudem ermöglicht der Schaltschrank jedoch auch einen Schutz für die äußere Umgebung, indem er beispielsweise eine Abschirmung elektromagnetischer Emissionen der eingebauten Komponenten, Schutz gegen gefährliche Spannungen (Schutzklassen: Schutzerdung oder Schutzisolation) und/oder gegebenenfalls einen Brandschutz (Speziallösungen für Entrauchungsanlagen) bietet.

Üblicherweise setzten sich Schaltschränke grundsätzlich aus einem Rahmengestell und daran anbringbaren Wand- und Türelementen zusammen. Je nach dem gewünschten Einsatz und den daraus resultierenden Anforderungen an den Schaltschrank können das Rahmengestell und die daran anbringbaren Elemente aus unterschiedlichen Materialien und/oder mit unterschiedlichen Beschichtungen hergestellt sein. Für das Rahmengestell werden regelmäßig Rahmenschenkel verwendet, die als zylinderförmige Hohlprofile ausgebildet sind. Der Begriff "zylinderförmig" ist dabei nicht auf Zylinder mit einem kreisförmigen Querschnitt begrenzt, sondern umfasst gemäß der mathematischen Definition eines Zylinders auch Körper mit anderen Querschnittsformen.

Die Längsachse eines Rahmenschenkels kann seine Mittellängsachse sein oder jede hierzu parallel verlaufende Längsachse. Die Anordnung der Längsachsen zweier miteinander verbundener Rahmenschenkel schräg zueinander umfasst hierbei jede erdenkliche Anordnung, bei der die Längsachsen nicht parallel zueinander angeordnet sind. In der Praxis schließen die miteinander verbundenen Rahmenschenkel zumeist einen rechten Winkel zwischen sich ein.

Derartige Rahmengestelle für einen Schaltschrank sind aus dem Stand der Technik grundsätzlich bekannt, beispielsweise aus der DE 43 36 188 C2. Diese Patentschrift offenbart einen Schaltschrank mit einem Rahmengestell, das aus Rahmenschenkeln zusammengesetzt ist. Zunächst werden zwei nicht zerlegbare Grund-Rahmen gebildet, die sich in einer ersten Gestaltungsvariante aus den horizontalen bodenseitigen Rahmenschenkeln (den unteren Grund-Rahmen bildend) sowie den horizontalen deckenseitigen Rahmenschenkeln (den oberen Grund-Rahmen bildend) zusammensetzen. Diese beiden Grund-Rahmen können über vertikal verlaufende Rahmenschenkel lösbar miteinander verbunden werden. Alternativ können in einer zweiten Gestaltungsvariante aus jeweils zwei vertikalen und zwei horizontalen Rahmenschenkeln ein vorderer und ein hinterer, nicht zerlegbarer Seiten-Rahmen gebildet werden, die dann über obere und untere horizontale Rahmenschenkel lösbar miteinander verbunden werden können. Die lösbare Verbindung kann beispielsweise mit Hilfe von Befestigungsschrauben oder dergleichen am Montageort erfolgen, während die beiden Grund- oder Seiten-Rahmen in der Praxis üblicherweise durch Verschweißen der sie bildenden Rahmenkomponenten erzeugt werden.

Jedoch ergeben sich aus einer solchen Bauweise mehrere Nachteile. So benötigen die nicht zerlegbaren Grund- bzw. Seiten-Rahmen mehr Raum bei Lagerung und Versand als einzelne Rahmenschenkel. Ferner gestaltet sich aufgrund der Größe der Grund bzw. Seiten-Rahmen auch die Handhabung bei der Montage am Einsatzort unter Umständen schwieriger als es bei einzelnen Rahmenschenkeln der Fall wäre.

Auch kann das Vorsehen einer Schweißnaht zwischen den miteinander zu verbindenden Rahmenkomponenten aus mehreren Gründen nachteilig sein. So ist bekannt, dass beim Verschweißen ein Stoffschluss zwischen den zu verbindenden Elementen dadurch erreicht wird, dass das Material der zu verbindenden Elemente durch lokale Wärmeeinbringung stark erhitzt wird, um dieses im Bereich der Schweißnaht zum Schmelzen zu bringen. Hieraus kann sich ein thermischer Verzug der miteinander verschweißten Elemente ergeben. Im Falle der Rahmenschenkel hat dies zur Folge, dass zusätzliche Nachbearbeitungsschritte erforderlich sind, um die Rahmenschenkel wieder auszurichten und in die gewünschte Position relativ zueinander zu bringen. Dies ist insbesondere dann der Fall, wenn die Rahmenschenkel mit sogenannten Eckverbindern verschweißt werden, wie beispielsweise bei den aus der DE 196 47 753 C2 und der DE 196 47 814 C2 bekannten Anordnungen, da die Eckverbinder in der Regel eine größere Wanddicke im Anbindungsbereich aufweisen als die Hohlprofile der Rahmenschenkel.

Ein weiterer Nachteil kann sich bei der Nutzung eines solchen Rahmengestells für einen Schaltschrank ergeben, der eine Abschirmung elektromagnetischer Emissionen der eingebauten Komponenten nach außen und einen Schutz der eingebauten Komponenten vor elektromagnetischer Beeinflussung (EMV) bereitstellen soll. Für eine solche Anwendung des Schaltschranks werden die Bauteile regelmäßig mit einer speziellen Beschichtung versehen, die die elektrische Leitfähigkeit des Schaltschranks verbessern und so eine optimale Erdung des Schaltschranks gewährleisten soll.

Weiterhin kann je nach Wahl der Materialien der Schaltschrankbauteile eine Beschichtung der einzelnen Bauteile zur Vermeidung von Korrosion notwendig sein. Auch in diesem Fall sind oftmals die Bauteile schon vor ihrer Verbindung zu einem Schaltschrank mit einer entsprechenden Beschichtung versehen (z.B. mit einer nichtmetallischen Beschichtung wie Kunststoff oder mit einer metallischen Beschichtung wie Zink).

Durch den Schweißprozess zur Verbindung der Rahmenschenkel wird im Bereich der Schweißnaht ein Abbrand erzeugt, der die Beschichtung der Rahmenschenkel lokal zerstört und somit die gewünschte elektrische Leitfähigkeit und/oder die Korrosionsbeständigkeit der Rahmenschenkel beeinträchtigen kann. Weiterhin können manche Beschichtungen den Schweißprozess nachteilig beeinflussen, so dass auf eine Beschichtung der zu verbindenden Bauteile vor dem Schweißprozess verzichtet werden muss.

Um eine Korrosion zu vermeiden oder eine verbesserte Leitfähigkeit der Rahmenschenkel sicherzustellen, bleibt nur die Möglichkeit, nach dem Schweißprozess eine entsprechende Beschichtung aufzutragen oder wiederherzustellen, was mit zusätzlichen Kosten und einem erhöhten Zeitaufwand bei der Fertigung und Montage einhergeht.

Nicht zuletzt sind als Nachteile des Schweißens der hohe Energiebedarf und die kostenintensiven Arbeitsschutzmaßnahmen für das Schweißpersonal zu nennen.

Um die vorstehend genannten Nachteile zu verringern, ist es aus der Praxis auch bekannt, die Rahmenschenkel an den Ecken mit Eckverbindern zu verschrauben statt zu verschweißen, wie beispielsweise in der DE 33 44 598 C1 offenbart. Wie die Praxis gezeigt hat, ist es jedoch bei dieser Gestaltungsvariante erforderlich, das Rahmengestell zusätzlich dadurch verwindungssteifer bzw. verwindungssicherer zu machen, indem man zusätzliche Querstreben mit mindestens zwei senkrecht zueinander stehenden Schienenseiten einbaut, um einander gegenüberliegende horizontale oder vertikale Rahmenschenkel des Rahmengestells miteinander verbinden. Dies ist insbesondere dann notwendig, wenn der Schaltschrank im Gebrauch mit Hilfe eines Krans versetzt werden soll. Hierzu können beispielsweise an den deckenseitigen Ecken der Eckverbinder Hakenösen angebracht sein, die zur Aufnahme von Karabinern oder dergleichen genutzt werden können. Die von einem Kran ausgehende Zugkraft wird über solche Hakenösen in das Rahmengestell des Schaltschrankes eingeleitet und kann dort zu einem Verbiegen oder einem Verzug der vertikalen Rahmenschenkel führen. Das Vorsehen zusätzlicher Querstreben kann dieses Problem zwar lösen, jedoch bedeutet dies wiederum einen zusätzlichen Zeit- und Kostenaufwand bei der Fertigung und Montage.

Aus der DE 202 0 813 U1 ist schließlich eine Eckverbindungsvorrichtung zum Aufbau eines Gehäuserahmens bekannt, bei der ein erstes Rahmenprofil mit einem zweiten Rahmenprofil in einem Eckbereich des Rahmengestells mittels einer Arretierung verbunden wird. Das erste Profil weist hierzu an einer Längsseite eine Öffnung im Bereich der Eckverbindung auf, die sich von der Außenseite zu der Innenseite des Profils hin erstreckt und in die ein Vorsprung des zweiten Profils einsetzbar ist, der an der Stirnseite des zweiten Profils ausgebildet ist. Der Vorsprung des zweiten Profils weist wiederum eine Aussparung auf, in die eine Spannhülse als Arretierung zum Verbinden der beiden Profile miteinander von der Innenseite des ersten Profils hereingesetzt werden kann. Auf diese Weise wird verhindert, dass das zweite Profil mit seinem Vorsprung aus der Öffnung und dem Innenraum des ersten Profils heraus gezogen werden kann.

Aus der WO 2007/082962 A2 ist ein als Geräteträger dienendes Gestell bekannt, bei dem jeweils drei als Hohlprofile ausgestaltete, orthogonal zueinander angeordnete Schenkel mittels eines würfelförmigen Eckverbinders aneinander befestigt sind. Zur Verbindung zwischen einem Hohlprofil und einem zugehörigen Eckverbinder dient jeweils eine Schraube, die sich durch den Eckverbinder in das Hohlprofil hinein bis zu einem Widerlager erstreckt, welches im Hohlprofil nahe dem Eckverbinder vorhanden ist. Durch Festziehen der Schraube wird der Eckverbinder mit dem Hohlprofil verspannt.

Auch bei diesen Ausführungsformen kann sich jedoch das Problem einstellen, dass bei einem Versetzen des Schaltschrankes mittels eines Krans der Schaltschrank keine ausreichende Verwindungssteifigkeit aufweist, so dass gegebenenfalls zusätzliche Elemente vorgesehen werden müssen, um eine ausreichende Stabilität des Gestells zu gewährleisten.

Die vorliegende Erfindung hat sich zum Ziel gesetzt, ein Gestell bereitzustellen, das einerseits möglichst vollständig zerlegbar ist, um eine einfache und kostengünstige Lagerung und Lieferung zu ermöglichen, und das andererseits im zusammengebauten Zustand zu einer verbesserten Stabilität des Gestells führt.

Diese Aufgabe wird durch ein Gestell gemäß Anspruch 1 gelöst.

Mit anderen Worten bewirkt die Spanneinheit, dass wenigstens zwei Rahmenschenkel lösbar miteinander verbunden werden können, indem ein Rahmenschenkel von dem Spannelement in Richtung auf die Längsachse des anderen Rahmenschenkels gezogen wird. Je nach Gestaltung des Gestells sind hierbei unterschiedliche Anordnungen denkbar, nämlich eine erste, in der wenigstens zwei Rahmenschenkel unmittelbar gegeneinander verspannt werden, und eine zweite Variante, in der zwei oder mehrere Rahmenschenkel über einen zwischen den Rahmenschenkeln angeordneten Eckverbinder miteinander verbunden werden. Bei der ersten Variante ist es selbstverständlich auch möglich, mehr als zwei Rahmenschenkel, beispielsweise drei, vier oder fünf Rahmenschenkel, miteinander zu verspannen. Bei der zweiten Anordnungsvariante werden die Rahmenschenkel gegen den Eckverbinder verspannt. Beide Gestaltungsvarianten lassen sich bei Bedarf miteinander kombinieren, d.h. ein Rahmenschenkel ist an seinem ersten freien Ende gegen einen Eckverbinder verspannt, während er mit seinem zweiten freien Ende gegen wenigstens einen zweiten Rahmenschenkel verspannt sein kann.

Das Spannelement erstreckt sich über die im Wesentlichen gesamte Länge des ersten Rahmenschenkels, d.h. das Spannelement kann z. B. genau die gleiche Länge wie der zugeordnete Rahmenschenkel aufweisen. Alternativ kann es jedoch auch sinnvoll sein, dass sich das Spannelement etwas über die Länge des ersten Rahmenschenkels hinaus erstreckt, um beispielsweise mittels seiner Kraftübertragungsglieder mit den zu verspannenden Bauteilen in Eingriff gelangen zu können. Auch ist es bei einer entsprechenden Gestaltung der Kraftübertragungsglieder denkbar, dass sich das Spannelement über den größten Teil der Länge des ersten Rahmenschenkels erstreckt, jedoch etwas kürzer als der zugeordnete Rahmenschenkel ausgebildet ist. Bei dieser Gestaltungsvariante erstrecken sich die Kraftübertragungsglieder endseitig in den Rahmenschenkel hinein, um mit dem Spannelement zusammenzuwirken und dessen Spannkraft auf die zu verspannenden Bauteile des Gestells übertragen zu können.

Dadurch, dass das Spannelement sich über die im Wesentlichen gesamte Länge des ersten der zu verbindenden Rahmenschenkel erstreckt, kann eine Zugkraft, wie beispielsweise eine von einem Kran ausgehende und in den Schaltschrank eingeleitete Zugkraft, von dem Spannelement aufgenommen werden, wodurch eine Entlastung des Hohlprofils des ersten Rahmenschenkels erreicht wird. Weiterhin bietet die erfindungsgemäße Lösung mit einer Spanneinheit zum Verbinden von mehreren Rahmenschenkeln eine Lösung, bei der auf eine Schweißverbindung verzichtet werden kann, so dass die zuvor in diesem Zusammenhang beschriebenen Nachteile bei dem erfindungsgemäßen Gestell nicht auftreten.

Die Spannkraft bzw. Zugkraft, die wenigstens zwei Bauteile des Gestells miteinander verspannt, kann je nach Gestaltung der Spanneinheit auf unterschiedlichen physikalischen Effekten basieren. So kann die Zugkraft beispielsweise aus einer elastischen Rückstellkraft oder einer bei Schraubverbindungen üblichen Spannkraft resultieren.

In einer besonderen Ausführungsform kann die Spanneinheit zur Verbindung dreier Rahmenschenkel miteinander vorgesehen bzw. geeignet sein. Bei dieser Gestaltungsvariante ist beispielsweise der erste Rahmenschenkel zwischen dem zweiten und einem dritten Rahmenschenkel bzw. deren Längsachsen angeordnet und die Spanneinheit ist derart ausgebildet, dass eine in Richtung der Längsachse des ersten Rahmenschenkels wirkende Spannkraft des Spannelements von zugeordneten Kraftübertragungsgliedern auf den zweiten und dritten Rahmenschenkel übertragen wird, so dass diese jeweils gegen den ersten Rahmenschenkel verspannt werden.

Bei einer Ausführungsform, bei der ein erster gegen wenigstens einen zweiten Rahmenschenkel verspannt wird, stützen sich die Kraftübertragungsglieder des Spannelements jeweils an den zu verspannenden Rahmenschenkeln ab. Bei einer Anordnung, bei der mehr als zwei Bauteile des Gestells miteinander verspannt werden sollen, stützen sich die Kraftübertragungsglieder, die einem Spannelement zugeordnet sind, jeweils an den endseitigen Bauteilen ab, d.h. an denjenigen Bauteilen, die nur eine Anlagefläche an einem weiteren mit Hilfe des Spannelements zu verspannenden Bauteil aufweisen. Wird die Spannkraft des Spannelements durch die Kraftübertragungsglieder auf die jeweils endseitig angeordneten Bauteile übertragen, so werden diese infolge der Spannkraft in Wirkrichtung entlang der Längsachse L des Rahmenelements bewegt, dem das Spannelement zugeordnet ist, bis die zu verspannenden Bauteile einander berühren und so eine der Spannkraft entgegenwirkende Kraft aufbauen. Auf diese Weise wird durch eine Verspannung von zwei oder mehr Bauteilen eine Verbindung der Bauteile miteinander erreicht. Durch Lösen der Verspannung kann auch die Verbindung der Bauteile gelöst werden.

Das wenigstens eine Spannelement der Spanneinheit kann, wie nachfolgend näher ausgeführt wird, als starres Spannelement ausgeführt sein, wie z.B. als Stange, Bolzen oder dergleichen. Alternativ kann es auch ein flexibles Spannelement sein, wie beispielsweise ein Spannseil, Spanngurt oder dergleichen. Zudem kann das Spannelement entlang der Längsachse des Rahmenschenkels zumindest abschnittsweise elastisch ausgebildet sein oder mit elastischen Elementen der Spanneinheit verbindbar sein. Unter "elastisch" wird in diesem Zusammenhang die Eigenschaft verstanden, sich unter Einwirkung äußerer Kräfte elastisch verformen zu können und bei Wegfall der einwirkenden Kräfte durch eine elastische Rückstellkraft dazu zu tendieren, in die Ursprungsform zurückzukehren (wie dies beispielsweise bei einem Federelement der Fall ist). Bei einer solchen Ausführungsform wird die Spannkraft des Spannelements bzw. der Elemente der Spanneinheit durch die elastische Rückstellkraft erzeugt.

Die Spanneinheit braucht jedoch keine elastischen Elemente aufweisen. Vielmehr kann die Spannkraft, die die zu verspannenden Bauteile miteinander verspannt, beispielsweise dadurch erzeugt werden, dass die Spannlänge des Spannelements, d.h. der Abstand zwischen den Kraftübertragungsgliedern verringert wird, so dass die Bauteile, an denen sich die Kraftübertragungsglieder abstützen, in Richtung zueinander bewegt und gegeneinander verspannt werden.

Die Kraftübertragungsglieder oder zumindest eines der Kraftübertragungsglieder können separat ausgebildet sein und einen Stützabschnitt zur Abstützung an einem der zu verspannenden Bauteile des Gestells sowie einen Eingriffsabschnitt aufweisen, an dem das Kraftübertragungsglied zur Kraftübertragung mit dem Spannelement in Eingriff bringbar ist. Der Stützabschnitt kann beispielsweise eine Stützfläche, wie die Stirnfläche einer Schraubenmutter oder dergleichen umfassen, die geeignet ist, durch Abstützen des Kraftübertragungsglieds an einem der zu verspannenden Bauteile die Spannkraft des Spannelements auf dieses Bauteil zu übertragen.

Der Eingriffsabschnitt kann ebenfalls auf unterschiedliche Weise ausgebildet sein, beispielsweise als Gewinde, Rasthaken, Rastnasen oder dergleichen, die in entsprechende (korrespondierende) an dem Spannelement ausgebildete Vorsprünge, Ausnehmungen oder dergleichen eingreifen und mit diesen zusammenwirken können. So können der Eingriffsabschnitt eines Kraftübertragungsglieds und das zugeordnete Spannelement beispielsweise durch Einstecken, Einrasten, Eingreifen, Ein- oder Aufschrauben und dergleichen in Eingriff miteinander gebracht werden.

Der Eingriffsabschnitt eines Kraftübertragungsglieds kann alternativ auch als Haken oder Ausnehmung gebildet sein, mit der das Spannelement, beispielsweise in der Form eines flexiblen Spannelements, in Eingriff bringbar ist. Weiterhin ist es beispielsweise auch denkbar, dass eine Verbindung von Spannelement und Kraftübertragungsglied zur Einmalverwendung ausgebildet und durch Zerstörung des Spannelements lösbar gestaltet ist, etwa ähnlich dem Funktionsprinzip von Kunststoffkabelbindern. Bevorzugt wird jedoch eine zerstörungsfreie lösbare Verbindung von Spannelement und Eingriffsabschnitt, beispielsweise durch Vorsehen korrespondierender Gewinde an dem Spannelement und dem Eingriffsabschnitt des Kraftübertragungsglieds.

Anstelle einer separaten Ausbildung der Kraftübertragungsglieder ist es jedoch auch denkbar, dass eines oder beide der einem Spannelement zugeordneten Kraftübertragungsglieder einteilig mit diesem ausgebildet sind. Bei dieser Variante weisen die Kraftübertragungsglieder jeweils einen Stützabschnitt zur Abstützung an einem der zu verspannenden Bauteile des Gestells auf, jedoch keinen Eingriffsabschnitt, wie die separat ausgebildeten Kraftübertragungsglieder. Die Variante eines integral mit dem zugeordneten Spannelement ausgebildeten Kraftübertragungsgliedes ist insbesondere in Zusammenhang mit einem elastischen Spannelement oder einem flexiblen Spannelement günstig. So kann beispielsweise das Spannelement als Spannfeder oder dergleichen ausgebildet sein, die an einem oder beiden Endabschnitten Eingriffshaken oder dergleichen zur Abstützung an den zu verspannenden Bauteilen aufweist. Alternativ kann bei der Ausgestaltung des Spannelements als Spanngurt oder Spannseil dieses auch mit einem Knoten oder dergleichen an einem der zu verspannenden Bauteile befestigt werden, um so eine kraftübertragende Abstützung zu erreichen. Wieder eine andere Lösung kann vorsehen, dass ein flexibles Spannelement durch eine Durchgangsbohrung oder dergleichen an einem der zu verspannenden Bauteile geführt ist und durch einen Knoten oder dergleichen an einem Passieren aus der Durchgangsbohrung in eine Auszugsrichtung gehindert wird.

In einer weiteren Alternative kann wenigstens eines der Kraftübertragungsglieder integral an einem zu verspannenden Bauteile des Gestells, beispielsweise einem Eckverbinder, ausgebildet sein. Bei dieser Gestaltungsvariante weist das Kraftübertragungsglied zwar einen Eingriffsabschnitt auf, an dem es zur Kraftübertragung mit dem Spannelement in Eingriff bringbar ist, jedoch keinen Stützabschnitt zur Abstützung, da aufgrund der integralen Ausbildung mit dem zu verspannenden Bauteil auf diesen verzichtet werden kann.

Auch kann das Spannelement eine Stange umfassen, die wenigstens im Bereich eines ihrer Endabschnitte mit einem Gewinde versehen ist. Bei dieser Ausführungsform können die Kraftübertragungsglieder ein mit dem Gewinde des Spannelements korrespondierendes Innen- oder Außengewinde umfassen. So kann die Stange beispielsweise zumindest an einem ihrer Endabschnitte ein Außengewinde aufweisen und eines der zugeordneten Kraftübertragungsglieder ein korrespondierendes Innengewinde, so dass das Kraftübertragungsglied auf die Stange endseitig aufgeschraubt werden kann. Im umgekehrten Falle kann die Stange an einem Ende eine stirnseitige Ausnehmung mit einem Innengewinde umfassen, in das ein Kraftübertragungsglied mit einem korrespondieren Außengewinde einschraubbar ist.

Wie schon ausgeführt, ist es jedoch gleichermaßen möglich, däss im Falle eines integral ausgebildeten Kraftübertragungsgliedes ein entsprechendes mit dem Gewinde des Spannelements korrespondierendes Innen- oder Außengewinde an einem der zu verspannenden Bauteile des Gestells vorgesehen ist.

Das Rahmenprofil eines Rahmenschenkels kann ferner derart ausgebildet sein, dass es endseitig Stirnseiten aufweist, von denen zumindest eine im Wesentlichen senkrecht bzw. quer zu der Längsachse des Rahmenschenkels verläuft. Dabei begrenzen die Außenkanten der Mantelfläche des Hohlprofils die Stirnseiten. Die begrenzenden Außenkanten müssen dabei nicht in einer Ebene liegen, sondern können auch Vertiefungen oder Vorsprünge aufweisen. So kann es beispielsweise bei einer Ausführungsform, bei der die Rahmenschenkel unmittelbar miteinander verbunden sind und der erste Rahmenschenkel mit seiner Stirnseite an der Mantelfläche des zweiten Rahmenschenkels anliegt, günstig sein, dass die anliegende Stirnseite komplementär zu der Anlagefläche an der Mantelfläche des anderen Rahmenschenkels ausgebildet ist.

In einer alternativen Ausführungsform kann vorgesehen sein, dass die Rahmenschenkel an ihren Stirnseiten ohne dazwischen angeordneten Eckverbinder aneinander anliegen und miteinander verbunden werden. In einer solchen Ausführungsform können die Stirnseiten jeweils schräg zu der Längsseite des Rahmenschenkels verlaufen, beispielsweise in einem 45° Winkel zu dieser, so dass die endseitig aneinander anliegenden miteinander verbundenen Rahmenschenkel einen rechten Winkel zwischen sich einschließen. Auch ist es bei einer speziellen Gestaltung der Stirnseiten denkbar, mehr als zwei, beispielsweise drei, vier oder fünf Rahmenschenkel, die stirnseitig ohne dazwischen angeordneten Eckverbinder aneinander anliegen, mittels einer Spanneinheit gegeneinander zu verspannen und auf diese Weise miteinander zu verbinden.

Der Eckverbinder kann erfindungsgemäß wenigstens eine Durchgangsöffnung zur Aufnahme des Spannelements eines ersten der zu verbindenden Rahmenschenkel aufweisen. Je nach Ausgestaltung kann der Eckverbinder auch mehrere Durchgangsöffnungen zur Aufnahme mehrerer Spannelemente der zu verspannenden Rahmenschenkel aufweisen. In einer ersten Ausführungsform dient die Durchgangsöffnung des Eckverbinders ausschließlich dazu, ein Spannelement zumindest mit seinem Endabschnitt durchzuführen. Alternativ kann die Durchgangsöffnung auch mit einem Innengewinde oder dergleichen ausgebildet sein, wobei dieses die Funktion eines Eingriffsabschnitts des Kraftübertragungsglieds übernimmt, das bei dieser Ausführungsform integral mit dem Eckverbinder ausgebildet ist.

Die Verbindung eines ersten Rahmenschenkels mit einem Eckverbinder kann bei dieser Ausführungsform beispielsweise dadurch hergestellt werden, dass das Spannelement des ersten Rahmenschenkels durch die Durchgangsöffnung des Eckverbinders geführt und mit einem separat ausgebildeten Kraftübertragungsglied an der von dem ersten Rahmenschenkel abgewandten Seite der Durchgangsöffnung in Eingriff gebracht wird. Auf diese Weise wird eine Auszugsbewegung des Spannelements aus der Durchgangsöffnung in Richtung zu dem ersten Rahmenschenkel verhindert und es kann eine Spannkraft ausgeübt werden, die den ersten Rahmenschenkel gegen den Eckverbinder verspannt. Derselbe Effekt lässt sich mit einem integral an dem Eckverbinder ausgebildeten Kraftübertragungsglied erzielen.

Vorteilhaft haben die Hohlprofile der Rahmenschenkel eines Gestells einen identischen Querschnitt und weisen eine an dem Hohlprofil ausgebildete Durchführung für das Spannelement auf. Dabei kann diese Durchführung innerhalb des Hohlprofils ausgebildet sein oder sich außerhalb des Hohlprofils erstrecken. In beiden Fällen kann die Durchführung ein Teil des Hohlprofils selbst sein.

Grundsätzlich kann auch der innerhalb des Hohlprofils gebildete Hohlraum als Durchführung genutzt werden. Jedoch kann es sinnvoll sein, beispielsweise um eine verbesserte Führung und relative Ausrichtung des Spannelements zu dem Hohlprofil mittels der Durchführung zu erreichen, diese speziell auszubilden. Dabei ist es günstig, wenn der Innendurchmesser der Durchführung dem Außendurchmesser des Spannelements in etwa entspricht, d.h. nicht wesentlich größer ist als der Außendurchmesser des Spannelements.

Ferner kann das Hohlprofil eines Rahmenschenkels durch Umformen eines im Wesentlichen flachen, plattenartigen Ausgangsmaterials in eine zylinderförmige Profilform gebracht sein, wobei das Hohlprofil an zwei gegenüberliegenden Seitenkanten einen Verbindungsbereich zum Schließen des Hohlprofils aufweist, der zugleich die Durchführung umfasst, die durch wenigstens zwei Aufnahmelaschen gebildet ist, von denen an jeder der zwei Seitenkanten wenigstens eine ausgebildet ist.

Das im Wesentlichen flache Ausgangsmaterial des Hohlprofils kann beispielsweise ein Blechzuschnitt sein, der in einfacher Weise durch Biegen in die zylinderförmige Profilform gebracht werden kann. Als Material kann hierbei jedes biegbare Material, beispielsweise Metalle, metallhaltige Materialien oder ein Faserverbundwerkstoff, gewählt werden. Im Verbindungsbereich des Hohlprofils ist die Durchführung für das Spannelement vorgesehen, wobei das Spannelement in der Durchführung durch die wenigstens zwei Aufnahmelaschen geführt ist, die sich jeweils von einer der Seitenkanten des Hohlprofils nach außen erstrecken.

Die Aufnahmelaschen bilden zusammen mit dem darin aufgenommenen Spannelement einen Formschluss aus, der geeignet ist, die Seitenkanten des Hohlprofils zum Schließen derselben miteinander in Verbindung zu halten. Daher kann, wenn dies gewünscht ist, auf die Anwendung eines üblichen Schweißverfahrens zum Schließen des Hohlprofils mittels Stoffschlusses verzichtet werden, so dass auch bei der Herstellung der Hohlprofile für die Rahmenschenkel die damit verbundenen Nachteile entfallen.

Die Aufnahmelaschen können entlang der Längsachse des Rahmenschenkels zueinander versetzt angeordnet sein. Dabei kann ein Abstand in Richtung der Längsachse zwischen diesen vorgesehen sein. Alternativ können sie jedoch auch unmittelbar aufeinander folgend angeordnet sein.

Bei den Aufnahmelaschen kann es sich um geschlossene oder geöffnete Aufnahmebereiche handeln, d.h. die Aufnahmelaschen können beispielsweise hülsenförmig ausgebildet sein, hakenförmig und dergleichen. Entscheidend ist, dass mit Hilfe der Aufnahmelaschen eine Durchführung gebildet wird, durch die sich das Spannelement der Spanneinheit erstrecken kann.

Ferner können die Aufnahmelaschen der Seitenkanten jeweils durch einen laschenförmigen Vorsprung gebildet sein, der von der jeweiligen Seitenkante vorsteht und durch Umformen in eine hakenartige oder hülsenartige Form gebracht wird.

Weiterhin kann der Eckverbinder dazu ausgebildet sein, wenigstens zwei Rahmenschenkel, vorzugsweise drei Rahmenschenkel, miteinander zu verbinden, wobei er für jeden der zu verbindenden Rahmenschenkel wenigstens eine Anlagefläche aufweist. An diesem können die wenigstens zwei zu verbindenden Rahmenschenkel anliegen und sich abstützen. Typischerweise ist ein solcher Eckverbinder derart ausgebildet, dass er drei jeweils paarweise zueinander senkrecht stehende Rahmenschenkel miteinander verbinden kann. In einer Gestaltungsvariante können die Anlageflächen des Eckverbinders dementsprechend zueinander senkrecht angeordnet sein und die Rahmenschenkel können mit ihren Stirnflächen an den senkrechten Anlageflächen anliegen. Bei dieser Ausführungsform sind die Stirnflächen der Rahmenschenkel im wesentlichen senkrecht zur der Längsachse ausgebildet, was eine einfache Fertigung der Rahmenschenkel ermöglicht.

Alternativ können die Anlageflächen jedoch auch, je nach Gestaltung der Stirnseiten der Rahmenschenkel, in einem anderen Winkel zueinander angeordnet sein, der es erlaubt, dass die miteinander über einen Eckverbinder verbundenen Rahmenschenkel unter einem vorbestimmten Winkel zueinander ausgerichtet sind. Auch ist es denkbar, die Rahmenschenkel mit einer seitlichen Anlagefläche ihres Hohlprofils in Anlage mit einer Anlagefläche des Eckverbinders zu bringen.

Um eine einfachere Montage zu ermöglichen und zu gewährleisten, dass der Eckverbinder mit seinen Anlageflächen bündig an die Stirnseiten der zu verbindenden Rahmenschenkel passt, kann der Eckverbinder an jeder Anlagefläche wenigstens einen Vorsprung und/oder wenigstens eine Ausnehmung aufweisen, die mit dem Profilquerschnitt des Hohlprofils des jeweiligen zu verbindenden Rahmenschenkels korrespondiert und diesen im verbundenen Zustand auszurichten vermag. Hieraus ergibt sich der Vorteil, dass die Hohlprofile im Bereich ihrer Verbindung mit den Eckverbindern zusätzlich stabilisiert werden, da sie seitlich an entsprechenden Kontaktflächen der Vorsprünge oder Ausnehmungen des Eckverbinders anliegen.

So ist beispielsweise denkbar, dass von jeder Anlagefläche des Eckverbinders in eine Richtung, in die sich das jeweilige Rahmenschenkelhohlprofil im verbundenen Zustand erstrecken soll, ein Vorsprung vorsteht. Dieser korrespondiert derart mit dem Profilquerschnitt des zu verbindenden Rahmenschenkelhohlprofils, das dieses beispielsweise auf ihn aufsteckbar ist, wobei die Innenumfangsfläche des Hohlprofils dann an der Außenumfangsfläche des Vorsprungs zur Anlage kommt.

Alternativ kann jedoch auch eine, beispielsweise nutförmige, Ausnehmung an den jeweiligen Anlageflächen ausgebildet sein, in die ein Endabschnitt des zu verbindenden Hohlprofils eines Rahmenschenkels eingesteckt werden kann. Der Nutverlauf korrespondiert in diesem Fall ebenfalls mit dem Profilquerschnitt. Die Nutbreite kann so gewählt sein, dass sie nicht kleiner ist als die Wanddicke des Hohlprofils. Alternativ, beispielsweise für einen gewünschten Presssitz des Hohlprofils in der nutförmigen Ausnehmung, kann diese jedoch auch geringfügig kleiner als die Wanddicke des Hohlprofils sein.

Die Ausnehmung an der Anlagefläche braucht nicht nutförmig als eine umlaufende, dem Profilquerschnitt des Hohlprofils eines Rahmenschenkels entsprechende Nut ausgebildet zu sein, sondern kann eine flächige Ausnehmung sein, deren Außenkontur im Wesentlichen der Außenkontur des Profilquerschnitts des Hohlprofils entspricht. Während bei der Lösung mit einer Nut das verbundene Hohlprofil mit seinem Endabschnitt sowohl innenseitig als auch außenseitig in Anlage mit den Kontaktflächen der nutförmigen Ausnehmung gelangt, ist bei einer flächigen Ausnehmung nur eine außenseitige Kontaktierung möglich.

Kombinationen eines Vorsprungs mit einer Ausnehmung sind selbstverständlich ebenfalls denkbar.

Der Eckverbinder kann ferner wenigstens zwei separat ausgebildete Teile umfassen, die lösbar miteinander verbindbar sind. Da auf den Eckverbinder bei einem Verkippen des Schaltschranks sehr große Biegekräfte und -momente einwirken können, ist es ratsam, ihn möglichst stabil auszuführen. In der Praxis wird dies regelmäßig dadurch erreicht, dass der Eckverbinder als vergleichsweise massiver Körper, beispielsweise als einteiliges Druckgussteil oder dergleichen, hergestellt ist. Dies wirkt sich jedoch nachteilig auf das Gewicht des Schaltschranks aus, da derartige Teile ein vergleichsweise hohes Gewicht haben.

Demgegenüber ist es erfindungsgemäß möglich, die wenigstens zwei separaten Teile des Eckverbinders so zu gestalten, dass sie gemeinsam einen Hohlraum einschließen und lösbar miteinander verbunden sind. Auf diese Weise lässt sich ein Eckverbinder bereitstellen, der einerseits eine hohe Stabilität aufweist und andererseits eine Gewichtseinsparung ermöglicht. Zudem können in dem Hohlraum, der durch die wenigstens zwei Teile des Eckverbinders umschlossen wird, beispielsweise die Endabschnitte der Spannelemente der jeweiligen verbundenen Rahmenschenkel und gegebenenfalls deren Kraftübertragungsglieder, sofern gewünscht, aufgenommen sein.

Die Verbindung der beiden Teile des Eckverbinders kann beispielsweise mittels einer Schraube oder dergleichen erreicht werden, die in entsprechende Öffnungen an den beiden Teilen des Eckverbinders eingesetzt und eingeschraubt werden kann.

Alternativ kann jedoch auch, bei einer entsprechenden Gestaltung der Spannelemente, zumindest eines der Spannelemente zur Verbindung der wenigstens zwei Teile des Eckverbinders genutzt werden. Dabei können die wenigstens zwei Teile des Eckverbinders mit Hilfe der Spanneinheit eines der zu verbindenden Rahmenschenkel lösbar miteinander verbunden sein, wobei die zu verbindenden Teile des Eckverbinders miteinander fluchtende Aufnahmeöffnungen für das wenigstens eine Spannelement aufweisen.

Nachfolgend werden bevorzugte Ausführungsbeispiele der Erfindung anhand der beigefügten schematischen Figuren erläutert. Es stellen dar:
- Figur 1: eine isometrische Darstellung eines erfindungsgemäßen Gestells in Gestalt eines Schaltschrankrahmengestells;
- Figur 2: eine isometrische Ansicht einer Spanneinheit zur Verbindung der Rahmenschenkel eines erfindungsgemäßen Gestells gemäß Figur 1;
- Figur 3: eine isometrische Ansicht eines Hohlprofils eines Rahmenschenkels in einer möglichen Ausführungsform;
- Figur 4: eine Detailansicht des erfindungsgemäßen Schaltschrankrahmengestells gemäß Figur 1 in einer ersten Ausführungsform;
- Figur 5: eine Detailansicht des erfindungsgemäßen Schaltschrankrahmengestells gemäß Figur 1 in einer zweiten Ausführungsform; und
- Figur 6a - c: isometrische Ansichten der Teile eines Eckverbinders des erfindungsgemäßen Schaltschrankrahmengestells.

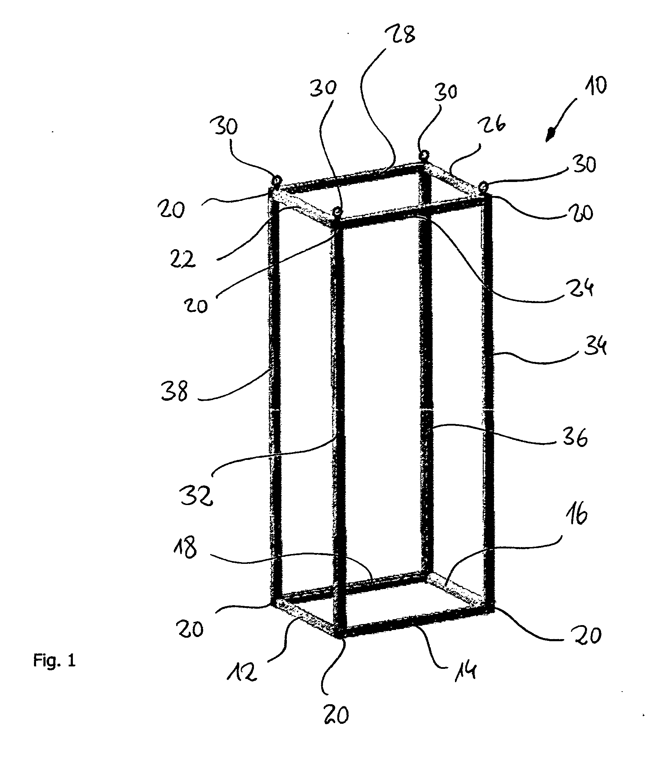

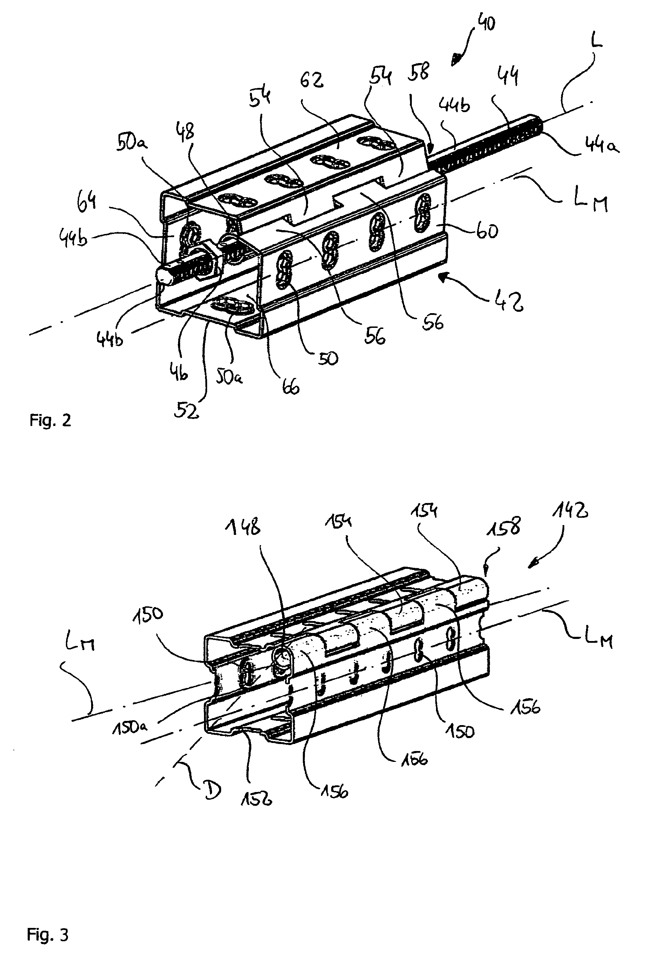

In Figur 1 ist schematisch ein erfindungsgemäßes Schaltschrankrahmengestell gezeigt, dass allgemein mit dem Bezugszeichen 10 versehen ist. Das Schaltschrankrahmengestell 10 umfasst in der gezeigten Ausführungsform vier untere horizontale Rahmenschenkel 12, 14, 16 und 18, vier obere horizontale Rahmenschenkel 22, 24, 26, 28, die jeweils ein Rechteck bilden sowie vier die beiden Rechtecke verbindende vertikale Rahmenschenkel 32, 34, 36 und 38. Die Rahmenschenkel sind in den Eckbereichen des Schaltschrankrahmengestells miteinander durch sogenannte Eckverbinder 20 verbunden, wobei im gezeigten Ausführungsbeispiel je zwei miteinander verbundene Rahmenschenkel einen rechten Winkel zwischen sich einschließen. Die Rahmenschenkel sind allesamt aus unten noch näher beschriebenen zylinderförmigen Hohlprofilen 42 gebildet, die sich entlang einer Längsachse L erstrecken (vgl. Figuren 2 und 3).

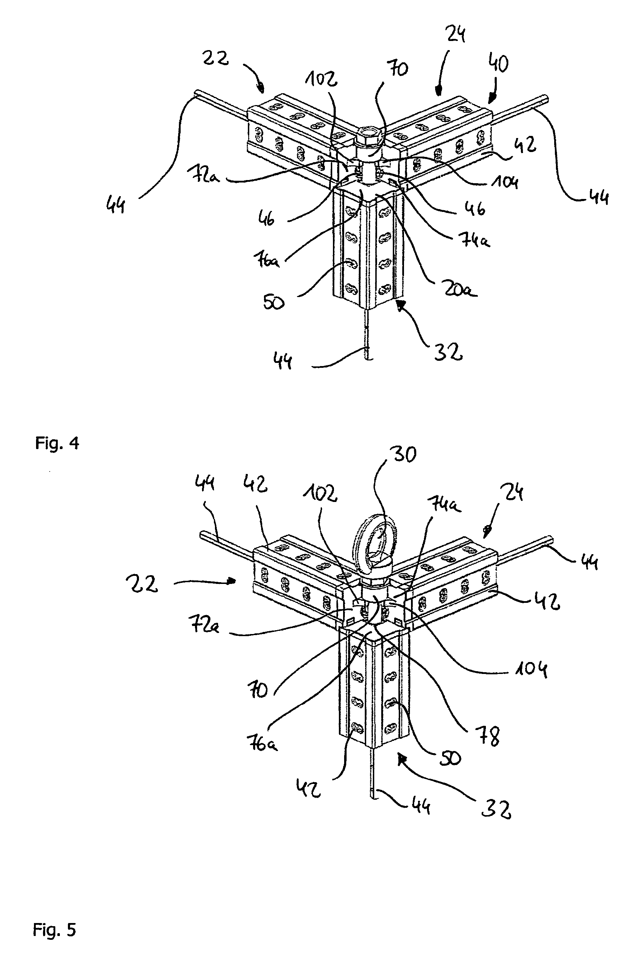

An den oberen Eckverbindern 20 können zusätzlich Kranösen 30 oder dergleichen angebracht sein, die ein Anheben und Versetzen des Schaltschrankrahmengestells 10 oder auch des fertig montierten Schaltschranks mit Hilfe eines Krans ermöglichen (vgl. Figur 5).

Die Verbindung der einzelnen Rahmenschenkel über die Eckverbinder miteinander erfolgt mittels Spanneinheiten 40, deren wesentliche Bestandteile beispielhaft in Figur 2 dargestellt sind. Ein Hohlprofil 42 eines der Rahmenschenkel des Schaltschrankrahmengestells 10 wird dabei mittels eines Spannelements 44 und zwei Kraftübertragungsgliedern 46 gegen einen Eckverbinder 20 verspannt und auf diese Weise über den Eckverbinder 20 mit anderen Rahmenschenkeln verbunden.

Das Spannelement 44 ist in der in Figur 2 dargestellten Ausführungsform als eine Gewindestange ausgebildet, die an ihrem Außenumfang ein Außengewinde 44a trägt. Zusätzlich weist sie zwei entgegengesetzt angeordnete abgeflachte Abschnitte 44b auf, die gewindefrei sind. Alternativ zu der in Figur 2 dargestellten Ausführungsform sind jedoch auch andere Gestaltungsformen denkbar, wie beispielsweise eine Ausführung mit einer Stange, die nur an ihren beiden Endabschnitten ein Außengewinde trägt, die Gestaltung als eine Stange, die im Bereich ihrer Enden eine sich von den Stirnflächen in die Stange erstreckende Innenbohrung mit einem Innengewinde aufweist, oder auch eine Gestaltung des Spannelements in Form eines flexiblen Gurts, eines Zugseils oder dergleichen.

Das Kraftübertragungsglied 46 kann, wie in Figur 2 gezeigt, eine Mutter mit einem korrespondierenden Innengewinde aufweisen, das ein Aufschrauben des Kraftübertragungsglieds auf das Spannelement ermöglicht. Alternativ kann das Kraftübertragungsglied jedoch auch als Spannschraube ausgebildet sein, die in ein Innengewinde an der Stange eingeschraubt wird, als Klips mit Rasthaken oder dergleichen, der mit einem Spanngurt oder Spannseil verbindbar ist usw.

Das als Gewindestange ausgebildete Spannelement 44 erstreckt sich entlang der Längsachse L des Hohlprofils 42 über die im Wesentlichen gesamte Länge eines zugeordneten Rahmenschenkels, d.h. wie in Figuren 4 und 5 zu erkennen ist, ein Stück weit darüber hinaus, und verbindet wenigstens zwei Rahmenschenkel, indem es sowohl den ersten Rahmenschenkel als auch den zweiten Rahmenschenkel gegen einen gemeinsamen Eckverbinder 20 verspannt. Alternativ können auch zwei Rahmenschenkel mit einer Spanneinheit unmittelbar miteinander verspannt werden. In beiden Fällen wird mit Hilfe des Spannelements 44 eine Spannkraft erzeugt, die in Richtung der Längsachse L des zugeordneten Rahmenschenkels wirkt und von den zwei Kraftübertragungsgliedern 46 auf die zu verspannenden Bauteile übertragen wird. Bei einem als Schraubenmutter ausgebildeten Kraftübertragungsglied 46 bildet das Innengewinde einen Eingriffsabschnitt, mit dem die Mutter in das Außengewinde 44a des Spannelements 44 eingreift. Weiterhin bildet diejenige Stirnfläche, mit der die Schraubenmutter an einem zu verspannenden Bauteil anliegt, einen Stützabschnitt, über den sich die Schraubenmutter an dem zu verspannenden Bauteil abstützt und auf diese Weise eine in Längsrichtung L wirkende Spannkraft des Spannelements 44 auf das anliegende Bauteil übertragen kann.

Die Figuren 2 und 3 zeigen zwei unterschiedliche Ausgestaltungen eines Hohlprofils 42 bzw. 142 eines Rahmenschenkels. Jedes der beiden Hohlprofile weist eine Durchführung 48, 148 für das Spannelement 44 auf, die eine geführte Aufnahme des Spannelements 44 innerhalb des Hohlprofils 42, 142 ermöglicht. Die Durchführung 48 bzw. 148 wird dabei durch mehrere hülsenförmige Aufnahmelaschen gebildet, die miteinander fluchten.

Bei der Herstellung eines Hohlprofils für einen Rahmenschenkel wird ein im Wesentlichen flaches Ausgangsmaterial, z.B. ein Blechzuschnitt, durch Umformen, beispielsweise Biegen, in eine zylinderförmige Profilform gebracht, die später das geschlossene Hohlprofil bilden soll. Dabei kann die zylinderförmige Profilform beispielsweise eine wie die in Figur 2 gezeigte im Wesentlichen fünfeckige oder die in Figur 3 gezeigte im Wesentlichen viereckige Profilform sein, bei der zwei gegenüberliegende im Wesentlichen parallele Seitenkanten in einem Verbindungsbereich 58 bzw. 158 aneinanderstoßen. Im Bereich der Seitenkanten sind jeweils mehrere laschenförmige Vorsprünge 54, 56 bzw. 154, 156 ausgebildet, die die Aufnahmelaschen bilden. Diese sind derart entlang der Längsachse L mit Versatz zueinander angeordnet, dass ein Vorsprung 54 bzw. 154 einer ersten Seitenkante jeweils in den Zwischenraum von zwei Vorsprüngen 56 bzw. 156 der zweiten Seitenkante eingreift oder umgekehrt. Zudem sind die laschenförmigen Vorsprünge ebenfalls beispielsweise durch Biegen umgeformt, so dass sie die hülsenförmigen Aufnahmelaschen ausbilden, welche in einer Verbindungsstellung des Hohlprofils miteinander fluchtend angeordnet sind.

Der hülsenförmigen Aufnahmelaschen, welche durch die Vorsprünge 54, 56 bzw. 154 und 156 gebildet sind, können, wie in den gezeigten Ausführungsformen, glatt bzw. bündig in die Seitenflächen 60, 62 bzw. 160, 162 des Hohlprofils im Verbindungsbereich 58 bzw. 158 übergehen, d.h. ohne einen Knick oder Sprung. Alternativ können diese jedoch auch einen Knick oder Versatz im Übergangsbereich aufweisen und in das Innere des Hohlprofils oder nach außen vorstehen.

Solange kein Spannelement in die Durchführung 148 eingesetzt ist, können bei den gezeigten Ausführungsformen der Rahmenschenkel die Seitenkanten des Hohlprofils 142 im Verbindungsbereich 158 unter Einwirkung einer entsprechenden äußeren Kraft wieder von einander gelöst werden. Ist jedoch ein Spannelement 44, wie beispielsweise die Gewindestange der Figur 2, in der Durchführung 48 aufgenommen, so fixiert dieses die Vorsprünge 54, 56 in ihrer relativen Stellung zueinander, so dass die Seitenkanten verbunden gehalten werden und das Hohlprofil 42 geschlossen bleibt.

Auf diese Weise erfüllt das Spannelement 44 zwei Funktionen, nämlich zum einen die miteinander zu verbindenden Rahmenschenkel mit Hilfe von Kraftübertragungsgliedern gegen die Eckverbinder zu verspannen und auf diese Weise zu verbinden und zum anderen das Hohlprofil, durch das sich das Spannelement erstreckt, geschlossen zu halten. Zudem kann, je nach Ausgestaltung des Spannelements, letzteres das Hohlprofil stabilisieren, beispielsweise wenn es sich bei dem Spannelement um ein starres Spannelement 44 wie eine Gewindestange mit einer entsprechenden Steifigkeit und Biegefestigkeit handelt. Auch ein flexibles Spannelement, wie ein Zugseil, Spanngurt oder dergleichen, kann geeignet sein, das Hohlprofil zu stabilisieren, da es unter Spannung gehalten ebenfalls einer Biegung des Hohlprofils entgegenwirken kann. Schließlich bilden die über die Eckverbinder miteinander verbundenen Spannelemente ein Netz aus Kraftübertragungslinien, das bei einer Krafteinleitung äußerer Zugkräfte z.B. durch einen Kran, den gesamten Schaltschrank stabilisiert.

Vorzugsweise weisen alle Rahmenschenkel des Schaltschrankrahmengestells 10 einen identischen Profilquerschnitt auf, wodurch Herstellungskosten verringert werden können, da die einzelnen Rahmenschenkel nur entsprechend der gewünschten Länge von einem Profilstrang eines vorgeformten Hohlprofils abgelängt werden müssen. Weiterhin kann das Hohlprofil eines Rahmenschenkels im Querschnitt betrachtet symmetrisch zu einer durch den Profilquerschnitt verlaufenden, die Längsachse L schneidenden Diagonale D ausgebildet sein. Durch diese Symmetrieeigenschaft der Hohlprofile wird sichergestellt, dass es bezüglich der Einbausituation keinen vorab festgelegten oberen bzw. unteren Abschnitt der Hohlprofile gibt, wodurch die Montage des Schaltschrankrahmengestells erheblich vereinfacht wird.

Zudem weisen diejenigen Seitenflächen des Hohlprofils, die parallel zueinander sind (d.h. in Figur 2 die Seitenflächen 60 und 64 sowie 62 und 66), eine Anzahl von Befestigungsaufnahmen 50 bzw. 150 auf, die als überlappende Doppellöcher in der Gestalt einer Acht ausgebildet sind. Die Befestigungsaufnahmen 50, 150 dienen zur Aufnahme von Befestigungsmitteln, mit deren Hilfe Einbauten in das Schaltschrankrahmengestell eingesetzt werden können. Bei dieser speziellen Ausführung der Aufnahmen 50 als Doppelloch werden anstelle einer einzigen bezüglich einer Mittellängsachse L_{M} der zugehörigen Seitenfläche achssymmetrisch angeordneten Befestigungsaufnahme zwei exzentrische, zu der Mittellängsachse L_{M} symmetrische Befestigungsaufnahmen an jeder der zueinander parallelen Seitenflächen des Hohlprofils 42, 142 angebracht. Diese können sich, wie in den Figuren gezeigt, überschneiden oder mit Abstand zueinander angeordnet sein. Die Symmetrie der Befestigungsaufnahmen zu der Mittellängsachse L_{M} stellt sicher, dass es bezüglich der Einbausituation der in das Schaltschrankrahmengestell einzusetzenden Einbauten keinen vorab festgelegten oberen bzw. unteren Abschnitt der Hohlprofile gibt.

Die Hohlprofile werden durch einen Umformprozess, beispielsweise durch Biegen oder Stanzbiegen, in ihre gewünschte Form gebracht, wobei die Befestigungsaufnahmen 50, 150 einen verstärkenden, in das Innere des Hohlprofils vorragenden Kragen 50a, 150a aufweisen. Weiterhin sind die Befestigungsaufnahmen 50, 150 der in den Fig. 2 und 3 gezeigten Ausführungsformen an einer gegenüber dem Außenumfang des Hohlprofils 42, 142 vertieften Seitenfläche bzw. rinnenartigen Vertiefung 52, 152 der jeweiligen Seiten 60, 62, 64 und 66 ausgebildet. Diese ebenfalls durch Biegen erzeugte rinnenartige Vertiefung 52, 152 der Seitenflächen trägt weiter zur Versteifung des Hohlprofils 42, 142 bei.

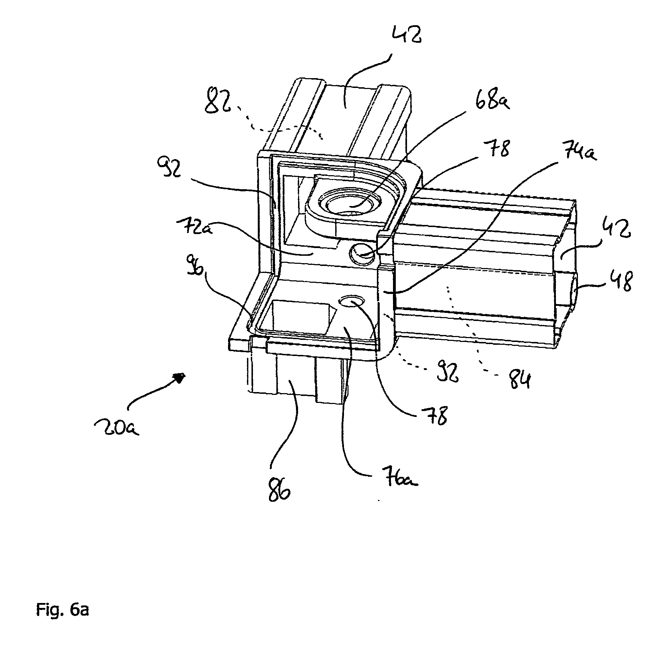

In den Figuren 4 und 5 ist gezeigt, wie drei Rahmenschenkel 22, 24 und 32 mittels eines Eckverbinders 20 und drei den Rahmenschenkeln zugeordneten Spanneinheiten 40 verbunden werden. Der Eckverbinder 20, von dem in den Figuren 4 und 5 nur ein erster Teil 20a gezeigt ist, weist drei Wandabschnitte 72a, 74a und 76 mit äußeren Anlageflächen auf, an denen die zu verbindenden Rahmenschenkel 22, 24 und 32 stirnseitig anliegen. Zusätzlich kann der Eckverbinder an jeder seiner Anlageflächen der Wandabschnitte 72a, 74a und 76a einen Vorsprung 82, 84 und 86 (vgl. Figur 6a) oder dergleichen aufweisen, der sich in Richtung zu dem zu verbindenden Rahmenschenkel erstreckt und auf den das Hohlprofil 42 des zu verbindenden Rahmenschenkels aufgesteckt werden kann (in Figur 6a sind auf den Vorsprüngen 82 und 84 aufgesteckte Hohlprofilabschnitte 42 dargestellt).

Weiterhin weist der Eckverbinder 20 im Bereich jedes Wandabschnitts72a, 74a, 76a ausgebildete Durchgangsbohrungen 78 auf, durch die sich die Spannelemente 44 des jeweiligen Rahmenschenkels 22, 24, 32 hindurch erstrecken können. Die Durchgangsbohrungen 78 können sich durch die Vorsprünge 82, 84 und 86 erstrecken. Alternativ können die Vorsprünge mit Versatz zu den Durchgangsbohrungen angeordnet sein.

Von einer dem Rahmenschenkel gegenüberliegenden Seite des jeweiligen Wandabschnitts kann dann ein Kraftübertragungsglied 46 mit dem sich durch die Durchgangsbohrung 78 hindurch erstreckenden Spannelement 44 in Eingriff gebracht werden, wobei das Kraftübertragungsglied einen größeren Außendurchmesser als die Durchgangsbohrung 78 hat. Im Falle eines als Gewindestange ausgebildeten Spannelements 44 kann das Kraftübertragungsglied 46, wie bereits bezüglich der Figur 2 erläutert, eine Schraubenmutter sein, die auf das Außengewinde 44a der Gewindestange aufgeschraubt wird. Mit Hilfe der Schraubenmutter 46 wird ein Herausziehen der Gewindestange 44 durch die Durchgangsbohrung 78 verhindert, so dass das Spannelement 44 einseitig festgelegt ist. Gleiches wird an dem jeweils anderen Ende der zu verbindenden Rahmenschenkel ebenfalls mit einem separaten Kraftübertragungsglied (spiegelbildliche Ausführungsform) oder mit einem integral ausgebildeten Kraftübertragungsglied an einem weiteren Eckverbinder oder Rahmenschenkel erreicht.

Somit sind bei einer spiegelbildlichen Ausführungsform jeweils zwischen zwei Kraftübertragungsgliedern ein Rahmenschenkel sowie zwei Eckverbinder mit einem Wandabschnitt angeordnet, die dadurch gegeneinander verspannt werden, dass die wirksame Spannlänge des Spannelements beispielsweise durch eine Schraubbewegung der Kraftübertragungsglieder aufeinander zu verkürzt wird.

Dieser Effekt lässt sich jedoch auch mit anderen Kombinationen aus Spannelement und Kraftübertragungsglied erreichen. So kann beispielsweise ein als Spanngurt, Spannseil oder dergleichen ausgebildetes Spannelement unmittelbar (z.B. mit einem Knoten) an dem zu verspannenden Bauteil, wie dem Eckverbinder, oder an dem Kraftübertragungsglied befestigt werden. Weiterhin kann das Spannelement zumindest teilweise starr ausgebildet sein und beispielsweise Vorsprünge (Rastnasen) aufweisen, die mit korrespondierenden Rastnasen oder einer entsprechend geformten Aufnahme derart zusammenwirken, dass eine Durchführung nur in eine Richtung möglich ist (Prinzip Kabelbinder).

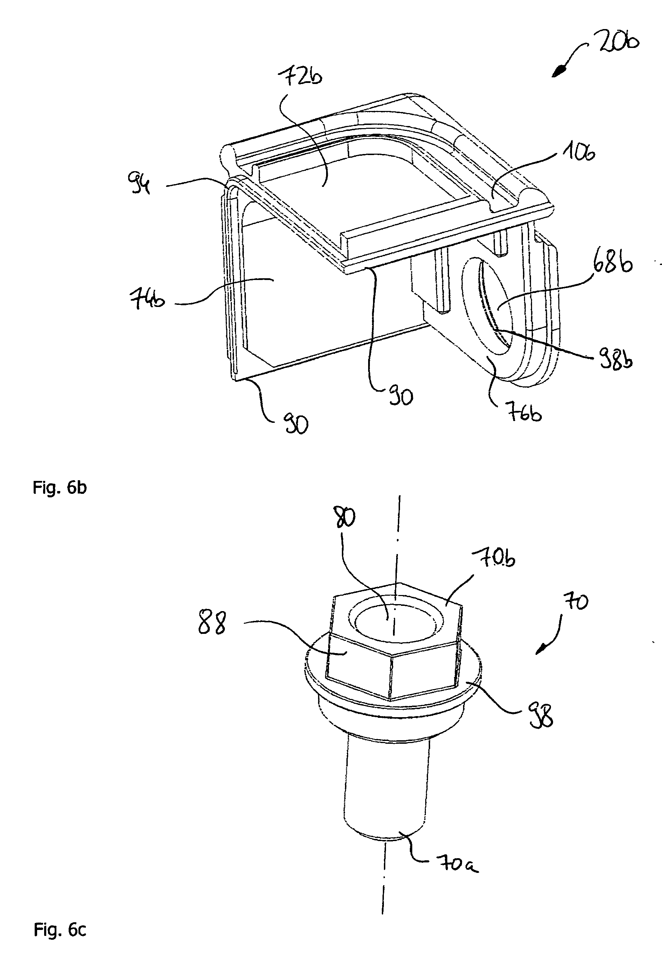

Wie bereits vorstehend angedeutet, ist der Eckverbinder 20 hier zweiteilig ausgebildet (vgl. Figuren 6a und 6b). Der zweite Teil 20b des Eckverbinders 20 entspricht in seinem Aufbau im Wesentlichen dem ersten Teil 20a mit drei im Wesentlichen zueinander senkrechten Wandabschnitten 72b, 74b, 76b. Im zusammengebauten Zustand begrenzen die Wandabschnitte 72a, 74a und 76a des ersten Teils 20a und die Wandabschnitte 72b, 74b, 76b des zweiten Teils 20b einen quaderförmigen inneren Hohlraum. An den äußeren Seitenflächen der Wandabschnitte 72b, 74b, 76b weist der zweite Teil 20b jedoch keine Vorsprünge zur Verbindung mit Rahmenschenkeln auf. Stattdessen kann zumindest an einer äußeren Seitenfläche (vgl. Fig. 6b, Wandabschnitt 72b) eine zur Außenseite offene Nut 106 angeordnet sein, die in zusammengebautem Zustand mit entsprechenden Aufnahmenuten an den verbundenen Rahmenschenkeln fluchtet und zur Aufnahme eines Dichtungselements dienen kann.

Um die beiden Teile 20a und 20b des Eckverbinders 20 miteinander zu verbinden, kann eine separate Spannschraube oder dergleichen eingesetzt werden. Es kann jedoch auch besonders vorteilhaft, wie in den Figuren 4 und 5 gezeigt, eines der Spannelemente mit einem zugeordneten Kraftübertragungsglied hierfür genutzt werden. Bei dieser Ausführungsform wird ein speziell ausgebildetes Kraftübertragungsglied 70 (vgl. auch Figur 6c) auf das Außengewinde 44a der Gewindestange 44 von außen aufgeschraubt. Hierzu weist der zweite Teil 20b des Eckverbinders 20 an einer Seitenfläche 76b eine mit der Durchgangsbohrung 78 des ersten Teils 20a fluchtende Befestigungsöffnung 68b auf. Durch diese wird das bolzenförmige Kraftübertragungsglied 70 auf die Gewindestange 44 aufgesetzt, das an einem ersten Ende 70a eine Innenbohrung (nicht dargestellt) mit Innengewinde aufweist, das auf die Gewindestange 44 aufgeschraubt werden kann. An seinem gegenüberliegenden Ende 70b besitzt das Kraftübertragungsglied 70 wenigstens einen Schraubkopf 88 (üblicherweise als Außen-Sechskant ausgebildet) mit einem Kragen 98. Zudem kann, wie in Figur 6c gezeigt, auch eine Bohrung an dem gegenüberliegenden zweiten Ende 70b des Kraftübertragungsglieds 70 ausgebildet sein, die ebenfalls ein Innengewinde aufweist und es so ermöglicht, dass beispielsweise eine Kranöse 30 in diese eingeschraubt wird. Zur Vereinfachung der Herstellung des Kraftübertragungsglieds 70 können beide Bohrungen als eine Durchgangsbohrung 80 mit Innengewinde (nicht dargestellt) ausgebildet sein.

Der Schraubkopf 88 ist so geformt ist, dass ein Monteur mit einem entsprechendem Werkzeug das Kraftübertragungsglied 70 in der gewünschten Richtung drehen kann, bis der Kragen 98 an der Anlagefläche 76b bzw. einer die Befestigungsöffnung 68b umgebenden Vertiefung 98b zur Anlage kommt, und auf diese Weise den ersten Teil 20a mit dem zweiten Teil 20b verspannt.

Der Zusammenbau des Schaltschrankrahmengestells wird nachfolgend unter Bezugnahme auf die Figuren beispielhaft an einem Eckverbinder 20 beschrieben: In einem ersten Schritt werden die Rahmenschenkel 22, 24 und 32 so auf die Vorsprünge 82, 84, 86 des Eckverbinders 20 aufgesteckt, dass die Durchführung 48 jedes Rahmenschenkels mit jeweils einer der Durchgangsbohrungen 78 am Eckverbinder 20 fluchtet. Dann wird die Gewindestange 44 eines jeden Rahmenschenkels in die Durchführung 48 des Hohlprofils 42 soweit eingeführt, bis sich ein freies Ende der Gewindestange 44 durch die jeweilige Durchgangsbohrung 78 des Eckverbinders 20 auf die gegenüberliegende Seite des jeweiligen Wandabschnittes hindurch erstreckt.

In einem weiteren Schritt werden die Muttern 46 auf das freie Ende der jeweiligen Gewindestange 44 der Rahmenschenkel 22 und 24 aufgeschraubt, so dass sich die Gewindestangen 44 nicht mehr durch die Durchgangsbohrungen 78 in Richtung zu dem Vorsprung, auf dem der Rahmenschenkel 22, 24 aufgesteckt ist, ziehen lassen. Sobald beide einem Spannelement zugeordneten Kraftübertragungsglieder in Eingriff mit diesem stehen und sich an den zu verspannenden Bauteilen abstützen, kann durch Justieren der Schraubtiefe die Spannkraft angepasst werden.

Anschließend wird der zweite Teil 20b des Eckverbinders 20 mit dem ersten Teil 20a verbunden. Hierzu wird der zweite Teil 20b mit seinen Führungskanten 90 in korrespondierende Führungsschienen 92 eingesetzt und soweit in den ersten Teil 20a eingeschoben, bis seine Führungskante 94 in die Führungsschiene 96 des ersten Teils 20a eingreift. In dieser Stellung fluchtet die Öffnung 68b mit der Durchgangsbohrung 78, durch die sich die Gewindestange 44 des Rahmenschenkels 32 erstreckt.

Zur Stabilisierung des Wandabschnitts 76b des zweiten Teils 20b ist der erste Teil 20a des Eckverbinders 20, wie in Figur 6a gezeigt, mit einer Stützfläche 100 versehen, die eine korrespondierende Befestigungsöffnung 68a aufweist, welche ebenfalls mit der Befestigungsöffnung 68b des zweiten Teils 20b fluchtet. Eine alternative Gestaltung ist in den Figuren 4 und 5 gezeigt, in denen von den Innenflächen der Wandabschnitte 72a, 74a Stütznasen 102, 104 in Richtung zu dem von den Teilen 20a, 20b des Eckverbinders 20 gebildeten Hohlraum vorstehen.

Nun wird das Kraftübertragungsglied 70 (vgl. auch Figur 6c) auf das Außengewinde 44a der Gewindestange 44 von außen soweit in Richtung zu dem Rahmenschenkel 32 aufgeschraubt, bis der Kragen 98 an der Anlagefläche 76b bzw. einer die Befestigungsöffnung 68b umgebenden Vertiefung zur Anlage kommt und auf diese Weise den ersten Teil 20a des Eckverbinders 20 mit dem zweiten Teil 20b sowie den Rahmenschenkel 32 mit dem Eckverbinder 20 einseitig verspannt.

Ergänzend kann eine Kranöse 30 in die Innenbohrung 80 des Schraubkopfes 88 eingeschraubt werden.

## Patentansprüche

1. Gestell (10) mit mehreren miteinander verbindbaren Rahmenschenkeln (12, 14, 16, 18, 22, 24, 26, 28, 32, 34, 36, 38), wobei jeder Rahmenschenkel als ein zylinderförmiges Hohlprofil (42; 142) ausgebildet ist und sich entlang einer Längsachse (L) erstreckt und die Längsachsen (L) zweier miteinander verbundener Rahmenschenkel schräg zueinander angeordnet sind, wobei das Gestell (10) ferner wenigstens eine Spanneinheit (40) aufweist, die zum Verbinden mehrerer Rahmenschenkel (22, 24, 32) einen ersten Rahmenschenkel (22, 24, 32) gegen wenigstens einen zweiten Rahmenschenkel oder gegen wenigstens einen zwischen den zu verbindenden Rahmenschenkeln (22, 24, 32) angeordneten Eckverbinder (20) zu verspannen vermag, und wobei die Spanneinheit (40) wenigstens ein separat ausgebildetes Spannelement (44) sowie zwei dem Spannelement (44) zugeordnete Kraftübertragungsglieder (46) umfasst, die eine in Richtung der Längsachse (L) des ersten zu verspannenden Rahmenschenkels (22, 24, 32) wirkende Spannkraft des Spannelements (44) auf die miteinander zu verspannenden Bauteile des Gestells (10) übertragen, so dass die Spannkraft den ersten Rahmenschenkel (22, 24, 32) gegen den wenigstens zweiten Rahmenschenkel und/oder gegen den wenigstens einen Eckverbinder (20) verspannt,
**dadurch gekennzeichnet, dass** jedes Spannelement (44) sich über im Wesentlichen die gesamte Länge des zugehörigen Rahmenschenkels (22, 24, 32) erstreckt.

2. Gestell nach Anspruch 1,
**dadurch gekennzeichnet, dass** wenigstens eines der Kraftübertragungsglieder (46) separat ausgebildet ist und einen Stützabschnitt zur Abstützung an einer der zu verspannenden Komponenten des Gestells (10) sowie einen Eingriffsabschnitt aufweist, an dem es zur Kraftübertragung mit dem Spannelement (44) in Eingriff bringbar ist.

3. Gestell nach Anspruch 1 oder 2,
**dadurch gekennzeichnet, dass** wenigstens eines der Kraftübertragungsglieder integral an einem der zu verspannenden Bauteile des Gestells (10), beispielsweise an dem Eckverbinder (20), ausgebildet ist.

4. Gestell nach einem der Ansprüche 1 bis 3,
**dadurch gekennzeichnet, dass** das Spannelement (44) eine Stange umfasst, die wenigstens im Bereich eines ihrer Endabschnitte mit einem Gewinde (44a) versehen ist.

5. Gestell nach Anspruch 4,
**dadurch gekennzeichnet, dass** die Kraftübertragungsglieder (46) ein mit dem Gewinde (44a) des Spannelements (44) korrespondierendes Innen- oder Außengewinde umfassen.

6. Gestell nach einem der vorhergehenden Ansprüche, **dadurch gekennzeichnet, dass** der Eckverbinder (20) wenigstens eine Durchgangsöffnung (78) zur Aufnahme des Spannelements (44) des wenigstens ersten der zu verbindenden Rahmenschenkel aufweist.

7. Gestell nach einem der vorhergehenden Ansprüche,
**dadurch gekennzeichnet, dass** die Hohlprofile (42; 142) der Rahmenschenkel eines Gestells (10) einen identischen Querschnitt und eine an dem Hohlprofil (42; 142) ausgebildete Durchführung (48) für das Spannelement (44) aufweisen.

8. Gestell nach einem der vorhergehenden Ansprüche, **dadurch gekennzeichnet, dass** das Hohlprofil eines Rahmenschenkels durch Umformen eines im wesentlichen flachen Ausgangsmaterials in eine geschlossene Profilform gebracht ist, wobei das Hohlprofil (43; 142) an zwei gegenüberliegenden Seitenkanten einen Verbindungsbereich (58; 158) zum Schließen des Hohlprofils aufweist, der die Durchführung umfasst, die durch wenigstens zwei Aufnahmelaschen gebildet ist, von denen an jeder der zwei Seitenkanten wenigstens eine ausgebildet ist.

9. Gestell nach Anspruch 8,
**dadurch gekennzeichnet, dass** jede der an den Seitenkanten ausgebildeten Aufnahmelaschen durch einen laschenförmigen Vorsprung gebildet ist, der sich von der jeweiligen Seitenkante erstreckt und durch Umformen in eine hakenartige oder hülsenartige Form gebracht ist.

10. Gestell nach einem der vorhergehenden Ansprüche, **dadurch gekennzeichnet, dass** der Eckverbinder (20) dazu ausgebildet ist, wenigstens zwei Rahmenschenkel (22, 24, 32) vorzugsweise drei Rahmenschenkel (22, 24, 32) miteinander zu verbinden, wobei er für jeden der zu verbindenden Rahmenschenkel wenigstens eine Anlageflächen aufweist.

11. Gestell nach Anspruch 10,
**dadurch gekennzeichnet, dass** der Eckverbinder (20) an jeder Anlagefläche wenigstens einen Vorsprung (82, 84, 86) und/oder wenigstens eine Ausnehmung aufweist, der oder die mit dem Profilquerschnitt des Hohlprofils des jeweiligen zu verbindenden Rahmenschenkels (22, 24, 32) korrespondiert und diesen in verbundenem Zustand relativ zu dem Eckverbinder (20) auszurichten vermag.

12. Gestell nach einem der vorhergehenden Ansprüche, **dadurch gekennzeichnet, dass** der Eckverbinder (20) wenigstens zwei separat ausgebildete Teile (20a, 20b) umfasst, die lösbar miteinander verbindbar sind.

13. Gestell nach Anspruch 12,
**dadurch gekennzeichnet, dass** die wenigstens zwei Teile (20a, 20b) des Eckverbinders (20) zusammen einen Hohlraum einschließen.

14. Gestell nach Anspruch 12 oder 13,
**dadurch gekennzeichnet, dass** die wenigstens zwei Teile des Eckverbinders mit Hilfe der Spanneinheit eines der zu verbindenden Rahmenschenkel lösbar miteinander verbindbar sind, wobei die zu verbindenden Teile des Eckverbinders miteinander fluchtende Aufnahmeöffnungen für das wenigstens eine Spannelement aufweisen.

## Claims

1. Rack (10) comprising a plurality of frame pieces (12, 14, 16, 18, 22, 24, 26, 28, 32, 34, 36, 38) adapted to be interconnected, wherein each frame piece is constructed as a cylindrical hollow profile (42; 142) and extends along a longitudinal axis (L), and the longitudinal axes (L) of two interconnected frame pieces are arranged obliquely to one another, wherein the rack (10) further comprises at least one bracing unit (40) which, for the purpose of connecting a plurality of frame pieces (22, 24, 32), is capable of bracing a first frame piece (22, 24, 32) against at least one second frame piece or against at least one corner connector (20) arranged between the frame pieces (22, 24, 32) to be connected, and wherein the bracing unit (40) comprises at least one tensioning element (44) formed as a separate member as well as two force transmission members (46) which are associated with the tensioning element (44) and which transmit a tensioning force of the tensioning element (44), which force is effective in the direction of the longitudinal axis (L) of the first frame piece (22, 24, 32) to be braced, to the structural components of the rack (10) which are to be braced to each other, so that the tensioning force braces the first frame piece (22, 24, 32) against the at least one second frame piece and/or against the at least one corner connector (20),
**characterized in that** each tensioning element (44) extends substantially over the entire length of the associated frame piece (22, 24, 32).

2. Rack according to claim 1,
**characterized in that** at least one of the force transmission members (46) is formed as a separate member and has a supporting section, for support on one of the components of the rack (10) which are to be braced, and also an engaging section by means of which said force transmission member can be brought into engagement with the tensioning element (44) for force transmission purposes.

3. Rack according to claim 1 or 2,
**characterized in that** at least one of the force transmission members is constructed integrally on one of the structural components of the rack (10), for example on the corner connector (20), which are to be braced.

4. Rack according to one of claims 1 to 3,
**characterized in that** the tensioning element (44) comprises a bar which is provided with a thread (44a), at least in the region of one of its end sections.

5. Rack according to claim 4,
**characterized in that** the force transmission members (46) comprise an internal or external thread which corresponds with the thread (44a) of the tensioning element (44).

6. Rack according to one of the preceding claims,
**characterized in that** the corner connector (20) has at least one through-opening (78) for receiving the tensioning element (44) of the at least first of the frame pieces to be connected.

7. Rack according to one of the preceding claims,
**characterized in that** the hollow profiles (42; 142) of the frame pieces of a rack (10) have an identical cross-section and have a lead-through (48), which is constructed on the hollow profile (42; 142), for the tensioning element (44).

8. Rack according to one of the preceding claims,
**characterized in that** the hollow profile of a frame piece was brought into a closed profile shape by forming a substantially flat starting material, said hollow profile (42; 142) having a connecting region (58; 158) on two opposite lateral edges for closing the hollow profile, which connecting region comprises the lead-through which is formed by at least two receiving flaps, at least one of which is provided on each of the two lateral edges.

9. Rack according to claim 8,
**characterized in that** each of the receiving flaps provided on the lateral edges is formed by a flap-shaped projection which extends from the particular lateral edge and is brought into a hook-like or sleeve-like shape by forming.

10. Rack according to one of the preceding claims,
**characterized in that** the corner connector (20) is configured for interconnecting at least two frame pieces (22, 24, 32), and preferably three frame pieces (22, 24, 32), said corner connector having at least one abutment face for each of the frame pieces to be connected.

11. Rack according to claim 10,
**characterized in that** the corner connector (20) has, on each abutment face, at least one projection (82, 84, 86) and/or at least one recess, which projection or recess corresponds with the profile cross-section of the hollow profile of the particular frame piece (22, 24, 32) to be connected, and is capable of orientating the latter, relative to the corner connector (20), when said frame piece is in the connected condition.

12. Rack according to one of the preceding claims,
**characterized in that** the corner connector (20) comprises at least two separately formed parts (20a, 20b) which can be interconnected in a detachable manner.

13. Rack according to claim 12,
**characterized in that** the at least two parts (20a, 20b) of the corner connector (20) together enclose a cavity.

14. Rack according to claim 12 or 13,
**characterized in that** the at least two parts of the corner connector can be interconnected in a detachable manner with the aid of the bracing unit of one of the frame pieces to be connected, the parts of the corner connector which are to be connected having receiving apertures, which are in alignment with one another, for the at least one tensioning element.

## Revendications

1. Bâti (10) comprenant une pluralité de branches de cadre (12, 14, 16, 18, 22, 24, 26, 28, 32, 34, 36, 38) pouvant être assemblées les uns aux autres, chaque branche étant réalisée sous la forme d'un profilé creux cylindrique (42 ; 142) et s'étendant le long d'un axe longitudinal (L), et les axes longitudinaux (L) de deux branches de cadre assemblées l'une à l'autre étant inclinés l'un par rapport à l'autre, ce bâti (10) présentant en outre au moins une unité de serrage (40) qui, pour assembler plusieurs branches de cadre (22, 24, 32), peut serrer une première branche de cadre (22, 24, 32) contre au moins une deuxième branche de cadre ou contre au moins un élément de raccordement d'angle (20) disposé entre les branches de cadre (22, 24, 32) à assembler, et l'unité de serrage (40) comportant au moins un élément de serrage (44) réalisé séparément et deux organes de transmission de force (46) associés à l'élément de serrage (44) qui transmettent aux pièces du bâti (10) à serrer les unes contre les autres une force de serrage de l'élément de serrage (44) agissant en direction de l'axe longitudinal (L) de la première branche de cadre (22, 24, 32) à serrer de sorte que la force de serrage serre la première branche de cadre (22, 24, 32) contre ladite deuxième branche et/ou contre ledit élément de raccordement d'angle (20).

2. Bâti selon la revendication 1,
**caractérisé en ce qu'**au moins un des organes de transmission de force (46) est réalisé séparément et présente un segment d'appui pour son appui contre un des composants du bâti (10) à serrer, ainsi qu'un segment de prise sur lequel ledit organe peut être amené en prise avec l'élément de serrage (44) pour la transmission de force.

3. Bâti selon la revendication 1 ou 2,
**caractérisé en ce qu'**au moins un des organes de transmission de force est entièrement réalisé sur une des pièces à serrer du bâti (10), par exemple sur l'élément de raccordement d'angle (20).

4. Bâti selon l'une des revendications 1 à 3,
**caractérisé en ce que** l'élément de serrage (44) comporte une tige qui est pourvue d'un filetage (44a), au moins dans la zone d'une de ses parties terminales.

5. Bâti selon la revendication 4,
**caractérisé en ce que** les organes de transmission de force (46) comportent un taraudage ou un filetage correspondant au filetage (44a) de l'élément de serrage (44).

6. Bâti selon l'une des revendications précédentes,
**caractérisé en ce que** élément de raccordement d'angle (20) présente au moins une ouverture traversante (78) destinée au logement de l'élément de serrage (44) de ladite première branche de cadre à assembler.

7. Bâti selon l'une des revendications précédentes,
**caractérisé en ce que** les profilés creux (42 ; 142) des branches de cadre d'un bâti (10) présentent une section identique et un passage (48) réalisé sur le profilé creux (42 ; 142) pour l'élément de serrage (44).

8. Bâti selon l'une des revendications précédentes,
**caractérisé en ce que** le profilé creux (42 ; 142) d'une branche de cadre obtient sa forme de profilé fermé par formage d'un matériau de départ sensiblement plat, le profilé creux (42 ; 142) présentant sur deux bords latéraux opposés une zone de liaison (58 ; 158) servant à fermer le profilé creux, laquelle zone comprend le passage qui est formé par au moins deux pattes de logement, dont au moins une est réalisée sur chacun des deux bords latéraux.

9. Bâti selon la revendication 8,
**caractérisé en ce que** chacune des pattes de logement réalisées sur les bords latéraux est formée par une saillie sous forme de patte, laquelle saillie s'étend depuis le bord latéral correspondant et obtient par formage sa forme en crochet ou en manchon.

10. Bâti selon l'une des revendications précédentes,
**caractérisé en ce que** l'élément de raccordement d'angle (20) est conçu pour relier ensemble au moins deux et plus préférentiellement trois branches de cadre (22, 24, 32), celui-ci présentant pour chacune des branches de cadre (22, 24, 26) à assembler au moins une surface d'appui.

11. Bâti selon la revendication 10,
**caractérisé en ce que** l'élément de raccordement d'angle (20) présente au moins une saillie (82, 84, 86) et/ou au moins un évidement, laquelle saillie ou lequel évidemment correspond à la section du profilé creux de la branche de cadre (22, 24, 32) respective à assembler et permet, à l'état raccordé, d'orienter celui-ci par rapport à l'élément de raccordement d'angle (20).

12. Bâti selon l'une des revendications précédentes,
**caractérisé en ce que** l'élément de raccordement d'angle (20) comporte au moins deux pièces (20a, 20b) réalisées séparément, lesquelles peuvent être reliées l'une à l'autre de manière amovible.

13. Bâti selon la revendication 12,
**caractérisé en ce que** lesdites pièces (20a, 20b) de l'élément de raccordement d'angle (20) renferment conjointement un espace creux.

14. Bâti selon la revendication 12 ou 13,
**caractérisé en ce que** lesdites pièces de l'élément de raccordement d'angle peuvent être reliées l'une à l'autre de manière amovible à l'aide de l'unité de serrage d'une des branches de cadre à assembler, ces pièces à relier de l'élément de raccordement d'angle présentant des ouvertures de logement alignées les unes par rapport aux autres pour ladite unité de serrage.
